(19) Europäisches Patentamt
European Patent Office
Office européen des brevets

(11) **EP 2 651 656 B1**

(12) **EUROPEAN PATENT SPECIFICATION**

(45) Date of publication and mention
of the grant of the patent:
**26.04.2017  Bulletin 2017/17**

(21) Application number: **11805279.4**

(22) Date of filing: **01.12.2011**

(51) Int Cl.:
*B44B 5/02* *(2006.01)*        *B44C 1/24* *(2006.01)*
*B44F 1/02* *(2006.01)*

(86) International application number:
**PCT/US2011/062899**

(87) International publication number:
**WO 2012/082391 (21.06.2012 Gazette 2012/25)**

(54) **IMAGES AND METHOD OF MAKING THE SAME**

BILDER UND VERFAHREN ZU IHRER HERSTELLUNG

IMAGES ET PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2010   US 422804 P
27.09.2011   US 201161539671 P**

(43) Date of publication of application:
**23.10.2013   Bulletin 2013/43**

(73) Proprietor: **3M Innovative Properties Company
St. Paul, MN 55133-3427 (US)**

(72) Inventors:
• **BAY, Randy S.
Saint Paul, MN 55133-3427 (US)**
• **DOCKEN, James A. Jr.
Oakdale, MN 55128 (US)**
• **NELSON, Brian K.
Saint Paul, MN 55133-3427 (US)**
• **PEKUROVSKY, Mikhail L.
Saint Paul, MN 55133-3427 (US)**
• **ROMDHANE, Ilyess H.
Saint Paul, MN 55133-3427 (US)**
• **THEIS, Daniel J.
Saint Paul, MN 55133-3427 (US)**
• **BENSON, Olester Jr.
Saint Paul, MN 55133-3427 (US)**

(74) Representative: **Herzog, Fiesser & Partner
Patentanwälte PartG mbB
Isartorplatz 1
80331 München (DE)**

(56) References cited:
**EP-A2- 0 194 042      WO-A1-00/30869
WO-A1-01/85473      DE-A1- 10 158 347
FR-A1- 2 370 306**

**Description**

Background

Printing ink onto a surface is a common technique for altering the appearance of a surface; however some materials have poor adhesion to inks. In many cases, applying materials in addition to the ink creates a potential source of contamination.

Etching (including mold-etching) and frosting are often used to provide textured surfaces. Textured surfaces can also be applied to some surfaces (e.g., polymeric film) via embossing. A drawback of these techniques is that they require relatively expensive, custom tools for each image, and significantly restrict the ability to rapidly change the image. Prior art in this field is disclosed in WO 01/85473 and EP 0194042. Both documents disclose image forming patterns, embossed in articles, and having features of varying height.

Summary

There is a need for surface images that can be produced without adding materials and where modification of the tool surface is temporary, and can be can be quickly and inexpensively changed.

The invention as defined by independent claims 1 and 8 and the respective method claims fulfils this need.

In one aspect, the present disclosure describes a first article having a first major surface with at least first and second regions, the first region comprising a plurality of first structures having a first pitch and a first surface roughness (i.e., $R_a$, $Rq$, $R_z$, $R_{sk}$, $R_{ku}$, $S_{dq}$, $S_{dr}$, $S_{ds}$, $S_{sc}$, $S_{ac}$, $S_{tr}$, $S_{pk}$, $S_k$, or $S_m$ as used herein), the second region comprising a plurality of second structures having a second pitch and a second surface roughness, wherein the first and second pitches are the same (i.e., none of the first and second pitches varies by more than 2% from the average of the first and second pitches (e.g., if 5 randomly selected first pitches were 100.0, 100.3, 100.1, 100.2, and 100.1, and 5 randomly selected first pitches were 100.1, 99.9, 100.2, 100.0, and 100.1, the average of the first and second pitches is 100.1), wherein the first surface roughness is not greater than 50 (in some embodiments, not greater than 40, 30, 25, 20, 15, 10, 5, 4, 3, 2, or even not greater than 1) percent of the second surface roughness, and wherein at least a portion of the at least first and second regions have a surface roughness difference between them that together exhibit at least a portion of a first image. In some embodiments, at least a portion of the at least first and second regions have a surface roughness difference (in some embodiments, the difference is at least 5 or 10 percent) between them that together exhibit at least a portion of a second, third, fourth, fifth, and/or more image. Typically, the first outer surface is free of ink.

In some embodiments, the first article further comprises a third (fourth, fifth, or more) region comprising a plurality of third structures having a third (fourth, fifth, or more) pitch, and a third (fourth, fifth, or more) surface roughness, wherein the first, second, third (fourth, fifth, or more) pitches are the same. Typically, the first surface roughness is not greater than 50 (in some embodiments, not greater than 40, 30, 25, 20, 15, 10, 5, 4, 3, 2, or even not greater than 1) percent of the second and third (fourth, fifth, or more) surface roughness. In some embodiments, at least a portion of the at least two of the first, second, third, fourth, fifth and/or more regions have a surface roughness difference (in some embodiments, the difference is at least 5 or 10 percent) between them that together exhibit at least a portion of a second, third, fourth, fifth, and/or more image.

In another aspect, the present disclosure provides a second article having a first major surface with at least first and second regions, the first region comprising a plurality of first structures and having a first surface roughness (i.e., $R_a$, $Rq$, $R_z$, $R_{sk}$, $R_{ku}$, $S_{dq}$, $S_{dr}$, $S_{ds}$, $S_{sc}$, $S_{al}$, $S_{tr,}$, $S_{pk}$, $S_k$, or $S_m$ as used herein), the second region comprising a plurality of second structures and having a second surface roughness, wherein the first and second regions join together with no height discontinuity line, wherein the first surface roughness is not greater than 50 (in some embodiments, not greater than 40, 30, 25, 20, 15, 10, 5, 4, 3, 2, or even not greater than 1) percent of the second surface roughness, and wherein at least a portion of the at least first and second regions have a surface roughness difference between them that together exhibit at least a portion of a first image. "Height discontinuity line" refers to a sharp or sudden change in surface height such as the 'witness lines' or 'fault lines' that occur in a surface that has been printed, mechanically embossed with a tool or etched with a mask. A height discontinuity line extends along the border of two adjacent regions, and the change in surface height across the discontinuity line is more than 1 micrometer. In some embodiments, at least a portion of the at least first and second regions have a surface roughness difference (in some embodiments, the difference is at least 5 or 10 percent) between them that together exhibit a second, third, fourth, fifth, and/or more image. Typically, the first outer surface is free of ink.

In some embodiments, the second article further comprises a third (fourth, fifth, or more) region comprising a plurality of third structures and having a third (fourth, fifth, or more) surface roughness, wherein there is no height discontinuity line where adjacent regions join together. Typically the first surface roughness is not greater than 80 (in some embodiments, not greater than 90, or even not greater than 80) percent of the second and third (fourth, fifth, or more) surface roughness. In some embodiments, at least a portion of the at least two of the first, second, third, fourth, fifth and/or more regions have a surface roughness difference between (in some embodiments, the difference is at least 5 or 10 percent) them that together exhibit at least a portion of a second, third, fourth, fifth, and/or more image. In some embodiments, the first and second (third fourth, fifth, or more) structures have a pitch, wherein the pitch is the same. In some embodiments, the first major surface of the second article has a matte finish appearance.

In another aspect, the present disclosure describes a method of making embodiments of articles described herein, the method comprising:

> providing tooling having a patterned face (e.g., the face of the tooling having a desired pattern at least partially filling a portion of the cavities); and
> contacting a surface of a polymeric material to provide the article.

In another aspect, the present disclosure describes a method of making embodiments of articles described herein, the method comprising:

> providing tooling (e.g., a plate or rotatable tooling (e.g., a belt)) having a patterned face comprising cavities;
> applying a first material (e.g., a fugitive material (e.g., fugitive liquid)) to a portion of the face of the tooling in a desired pattern at least partially filling a portion of cavities; and
> contacting a surface of a polymeric material (e.g., a coatable or ultraviolet (UV) curable polymeric material) and the face of the tooling having the desired pattern at least partially filling a portion of the cavities to provide the article (wherein the polymeric material is solidified or cured, as applicable).

In another aspect, the present disclosure describes a method of making embodiments of articles described herein, the method comprising:

> providing a rotatable tooling roll having a patterned face comprising cavities;
> providing a rotatable nip roll positioned with respect to the tooling roll such that there is an infeed nip between the tooling roll and nip roll;
> applying a first material (e.g., a fugitive material (e.g., fugitive liquid)) to a portion of the face of the tooling roll in a desired pattern at least partially filling a portion of cavities; and
> introducing a continuous stream of extrudable polymeric material into the infeed nip while driving at least one of the tooling roll or nip roll to provide the article.

In another aspect, the present disclosure describes a method of making embodiments of articles described herein, the method comprising:

> providing a rotatable tooling roll having a patterned face;
> providing a rotatable nip roll positioned with respect to the tooling roll such that there is an infeed nip between the tooling roll and nip roll;
> introducing a continuous stream of UV curable polymeric material and a carrier film into the infeed nip while driving one of the tooling roll or nip roll, wherein the carrier film is closer to the nip roll than the UV curable polymeric material; and
> curing the UV curable polymeric material

to provide the article.

In another aspect, the present disclosure describes a method of making embodiments of articles described herein, the method comprising:

> providing a rotatable tooling roll having a patterned face comprising cavities;
> providing a rotatable nip roll positioned with respect to the tooling roll such that there is an infeed nip between the tooling roll and nip roll;
> applying a first material (e.g., a fugitive material (e.g., fugitive liquid)) to a portion of the face of the tooling roll in a desired pattern at least partially filling a portion of cavities;
> introducing a continuous stream of UV curable polymeric material (e.g., a curable resin) and a carrier film into the infeed nip while driving one of the tooling roll or nip roll, wherein the carrier film is closer to the nip roll than the UV curable polymeric material; and
> curing the UV curable polymeric material

to provide the article.

In another aspect, the present disclosure describes a method of making embodiments of articles described herein, the method comprising:

providing a rotatable tooling roll having a patterned face;
providing a rotatable nip roll positioned with respect to the tooling roll such that there is an infeed nip between the tooling roll and nip roll; and
introducing a continuous stream of extrudable polymeric material into the infeed nip while driving at least one of the tooling roll or nip roll to provide the article.

In another aspect, the present disclosure describes a method of making embodiments of articles described herein, the method comprising:

providing a rotatable tooling roll having a patterned face comprising cavities;
providing a rotatable nip roll positioned with respect to the tooling roll such that there is an infeed nip between the tooling roll and nip roll;
applying a first material (e.g., a fugitive material (e.g., fugitive liquid)) to a portion of the face of the tooling roll in a desired pattern at least partially filling a portion of cavities; and
introducing a continuous stream of extrudable polymeric material into the infeed nip while driving at least one of the tooling roll or nip roll to provide the article.

Exemplary uses of articles described herein include tool-less macro-patterning of transflectors, customized appearance for retroreflective sheeting, incorporation of security features (both overt and covert), decorative patterns for lighting diffusers, images or logos in medical films without inks or contamination, optical films with regions of higher and lower transmission (or haze or reflectivity), abrasives with regions of higher and lower cutting strength, acoustic films with regions of higher and lower sound absorption, perforated filtration films with regions of smaller and larger holes, identification cards or license plates with a unique digital identification, and consumer products with custom images (e.g., trademark indicia over a matte texture).

Brief Description of the Drawings

FIG. 1 is a scanning electron microscope digital image of a major surface of an exemplary article described here in at 50X.

FIG. 2 is a scanning electron microscope digital image of a first region of the major surface shown in FIG. 1 in at 1000X.

FIG. 3 is a scanning electron microscope digital image of a second region of the major surface shown in FIG. 1 in at 1000X.

FIGS. 4A-D are cross-sectional schematic views of an exemplary apparatus for making article described herein.

FIG. 5 is a cross-sectional schematic view of another exemplary apparatus for making articles described herein.

FIG. 6 is a cross-sectional schematic view of another exemplary apparatus for making articles described herein.

FIG. 7 is a camera digital image of a major surface of another exemplary article described here in at 50X.

FIG. 7A is a confocal microscope digital image of an area this is 861 micrometers by 199 micrometers showing the transition from a first region to a second region.

FIG. 8 is a confocal microscope digital image of a first region of the major surface shown in FIG. 7 of an area that is 770 micrometers by 185 micrometers.

FIG. 9 is a confocal microscope digital image of a second region of the major surface shown in FIG. 7 of an area 770 micrometers by 185 micrometers.

FIG. 10 is a schematic of an exemplary positive image.

FIG. 11 is a schematic of an exemplary negative image.

Detailed Description

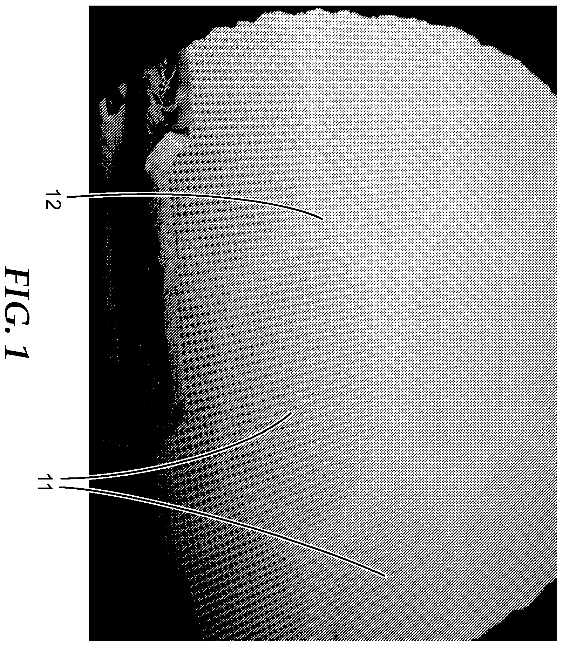

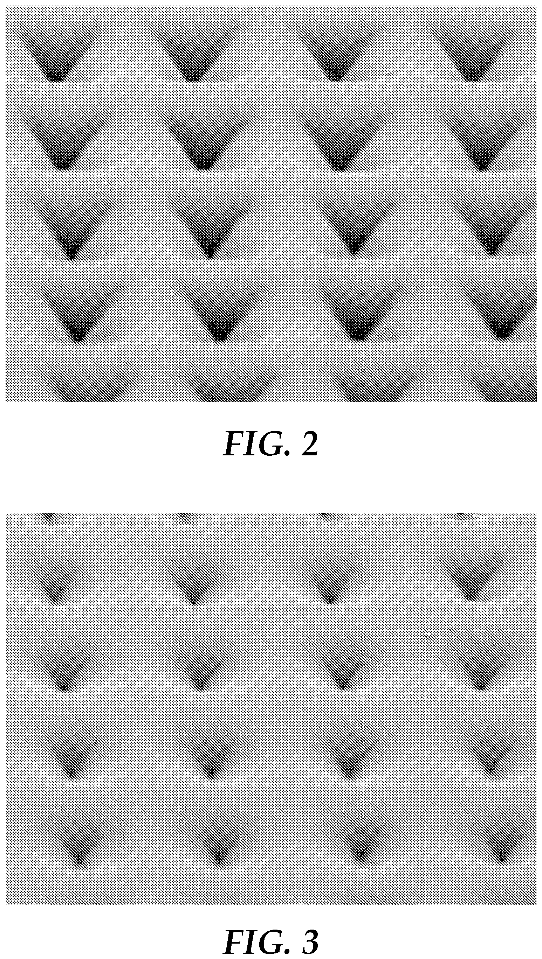

Referring to FIG. 1, a major surface of an exemplary article described herein is shown with first regions 11 and second regions 12. A more detailed view of the first and second regions (11 and 12, respectively) is shown in FIGS. 2 and 3, respectively.

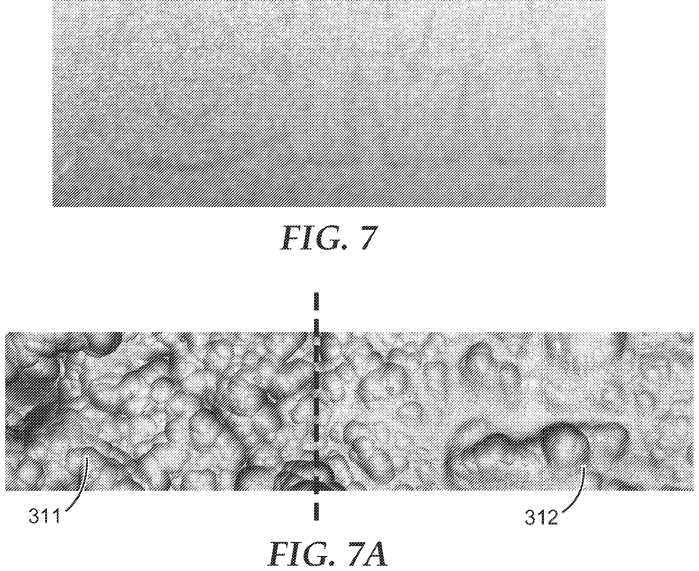

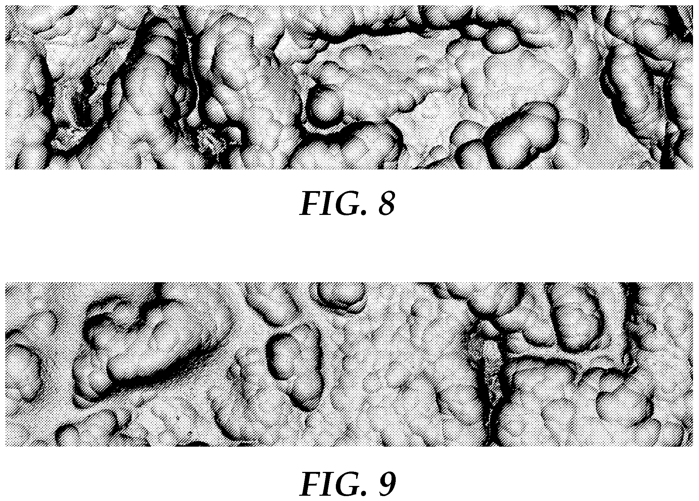

Referring to FIGS. 7 and 7A, a major surface of another exemplary article described herein is shown with first regions 311 and second regions 312. A more detailed view of the first and second regions (311 and 312, respectively) is shown in FIGS. 8 and 9, respectively.

In some embodiments, methods described herein further comprise removing first (and/or second (or more), if present) material (e.g., a fugitive and magnetic material(s)) from the face of the tooling roll prior to the roll completing a full revolution from where the material(s) was applied to a portion of the face of the tooling roll in the desired pattern to at least partially fill a portion of cavities.

A fugitive material (e.g., a fugitive liquid) can be removed from the face of the tooling, for example, by conventional techniques such as convection heating by blowing or impinging hot air via air nozzles, slot jets or perforated plate impingement, conductive heating by heating the tooling roll with steam or hot oil, or infrared heating by using radiant heat provided, for example, by quartz tube lamps or plate coils. Combinations of the heating techniques can be also used such as blowing hot air onto one side of the liquid and using hot oil to conductively heat the roll.

A magnetic material can be removed from the face of the tooling, for example, by changing the surface field or electrostatic charge similar to a Xerographic process.

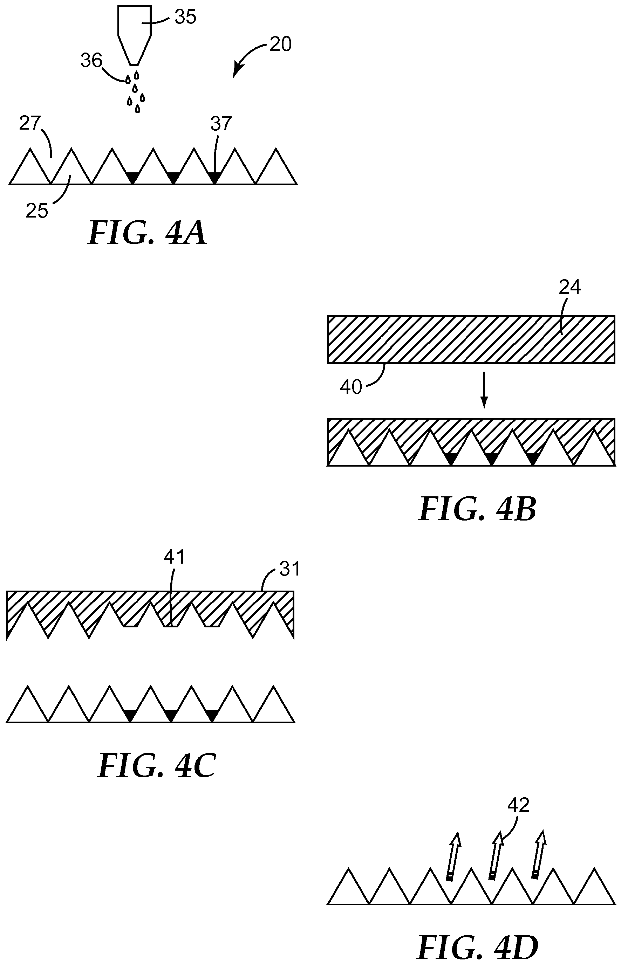

An exemplary casting apparatus 20 for making an article described herein is shown in FIG. 4. Fugitive liquid 36 is applied via dispenser 35 to a portion of the face of tool 25 in a desired pattern at least partially filling a portion 37 of forming cavities 27 (e.g., cube-corner element forming cavities). Surface 40 of material 24 and the face of the tooling having the at least partially filled portions of the cavities are contacted to provide the article 31. Article 31 is removed from contact with patterned tool 25, and some of replicated surface 40 has smoother texture 41 in a desired pattern. Optionally, fugitive material (liquid as shown) 36 is removed as vapor 42, for example, by ambient conditions or forced drying (e.g., enhanced air current (e.g., via a fan) without or without heat).

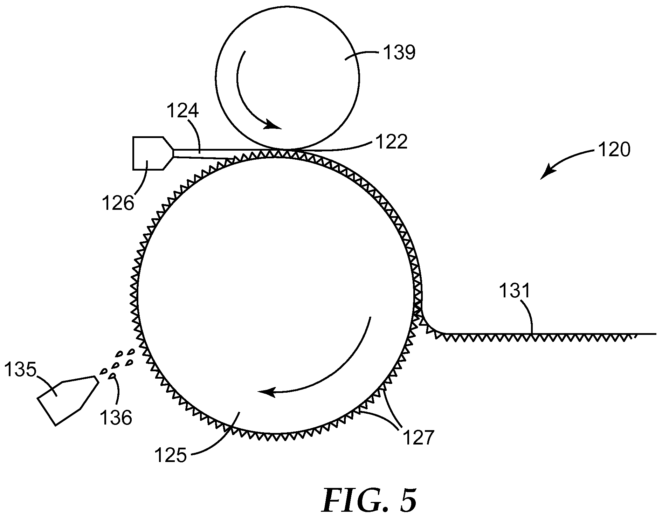

An exemplary casting apparatus 120 for making an article described herein is shown in FIG. 5. Fugitive material (liquid as shown) 136 is applied via dispenser 135 to a portion of the face of tool roll 125 in a desired pattern at least partially filling a portion of forming cavities 127 (e.g., cube-corner element forming cavities). Casting apparatus 120 includes resilient roll 139 (e.g., a rubber coated roller), nipped with tool roll 125. Extrusion die 126 for extruding polymeric material 124 into nip 122 is located adjacent to the nipped rolls. As polymeric material 124 enters nip 122, polymeric material 124 flows into forming cavities 127, less completely filling forming cavities 127 containing fugitive liquid 136. Thereafter, polymeric material 124 is conveyed about the outer surface of tool roll 125 whereupon it begins to cool and solidify. Typically, tool roll 125 is a chilled roll and has the capability of being cooled internally with water. Thereafter, extruded film 131 is removed from contact with tool roll 125 and conveyed for further downstream processing such winding.

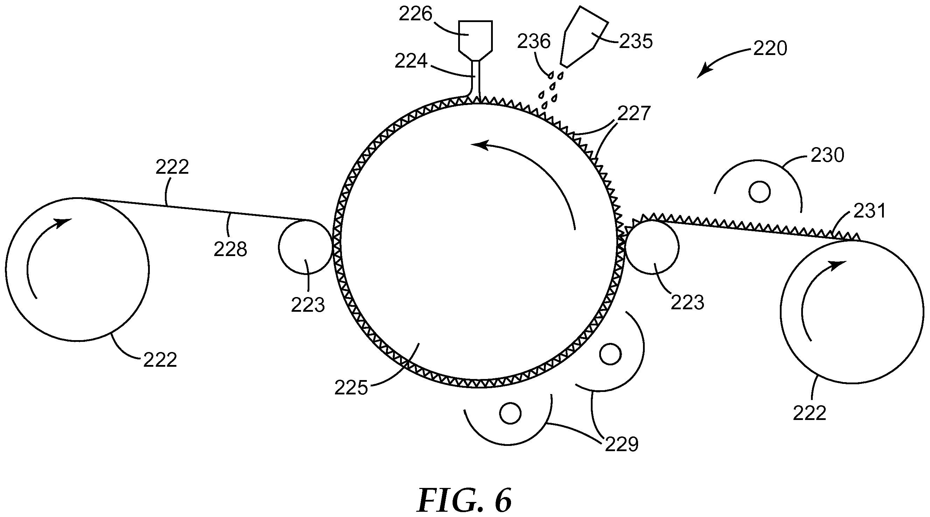

Another exemplary casting apparatus 220 for making an article described herein is shown in FIG. 6. Fugitive liquid 236 is applied via dispenser 235 to a portion of the face of tool roll 225 in a desired pattern at least partially filling a portion of forming cavities 227 (e.g., cube-corner element forming cavities). Overlay film 221 is drawn along guiding roller 222 or from a stock roll of material to nip roller 223 (e.g., a rubber coated roller), where overlay film 221 contacts suitable UV curable polymeric material (e.g., curable resin) 224 previously applied to patterned tool roll 225 through coating die 226. The excess UV curable polymeric material extending above forming cavities 227 of tool 225 is minimized by setting nip roller 223 to a gap setting that is effectively less than the height of the forming elements of tool 225. It will be understood that the gap setting may be achieved by applying pressure to nip roller 223. In this fashion, mechanical forces at the interface between nip roller 223 and tool 225 insure that a minimum amount of UV curable polymeric material 224 extends above cavities 227 of tool 225. Depending on the flexibility of overlay film 221, overlay film 221 may be optionally supported with suitable carrier film 228 that provides structural and mechanical durability to overlay film 221 during casting and solidification or curing. Carrier film 228 may be stripped from overlay film 221 after the resulting article is removed from tool 225 or left intact for further processing of the resulting article. Use of such a carrier film is particularly preferred for low modulus overlay films.

Curable polymeric material that forms the array of elements can be cured in one or more steps. For example, radiation sources (e.g., 129, 229) expose a curable polymeric material (e.g., a curable resin) to actinic radiation (e.g., ultraviolet light, visible light, etc.) depending upon the nature of the curable polymeric material in a primary curing step through overlay film (e.g., 121, 221). As can be appreciated by one of skill in the art, the selected overlay film need not be completely or 100 percent transparent to all possible wavelengths of actinic radiation that may be used in curing the curable polymeric material.

Alternatively, curing can be performed by irradiation through a transparent tooling roll (e.g., 25, 125, 225), such as disclosed in U.S. Pat. No. 5,435,816 (Spurgeon et al.). Tool (e.g., 25, 125, 225) has a molding surface having a plurality of cavities opening thereon which have the shape and size suitable for forming desired elements (e.g., cube-corner elements). The cavities, and thus resultant elements may be, for example cube-corner elements such as three sided pyramids having one cube-corner each (e.g., such as are disclosed in the U.S. Pat. No. 4,588,258 (Hoopman)) have a rectangular base with two rectangular sides and two triangular sides such that each element has two cube-corners each (e.g., such as are disclosed in U.S. Pat. No. 4,938,563 (Nelson et al.)), or of other desired shape, having at least one cube corner each (e.g., such as are disclosed in U.S. Pat. No. 4,895,428 (Nelson et al.)). It will be understood by those skilled in the art that any cube-corner element may be used in accordance with the present disclosure. The shape of the tooling cavities, and thus resultant article structures, may also be, for example, curve-sided prisms, truncated pyramids, lenslets, micro-needles, fasteners, stems, micro-flow channels and a variety of other geometries. The pitch of the surface refers to the repeat distance from one cavity or structure to the next adjacent cavity or structure.

The tooling can be used in a number of different forms, depending on the needs of the process being utilized. Flat plates or inserts are typically used for stamping, compression molding or injection molding processes. Rollers or cylinders are typically used for continuous processes such as coating, embossing and film extrusion. Some continuous processes utilize tooling in the form of a belt in order to integrate additional process steps or to enable the use of thin tooling plates that have been joined together.

Tooling roll (e.g., 25, 125, 225) should be such that the cavities will not deform undesirably during fabrication of the composite article, and such that the array of elements can be separated therefrom after solidification or curing.

Materials useful in forming the tooling roll (e.g., 25, 125. 225) preferably machine cleanly without burr formation, exhibit low ductility and low graininess, and maintain dimensional accuracy after groove formation. The tool can be made from polymeric, metallic, composite, or ceramic materials. In some embodiments, curing of the curable polymeric material will be performed by applying radiation through the tool. In such instances, the tool should be sufficiently transparent to permit irradiation of the polymeric material therethrough. Illustrative examples of materials from which tools for such embodiments can be made to include polyolefins and polycarbonates. Metal tools arc typically preferred, however, as they can be formed in desired shapes. The primary curing can completely or partially cure the elements.

Second radiation source (e.g., 230) can be provided to cure the polymeric material after article (e.g., 231) has been removed from tool (e.g., 225). The extent of the second curing step is dependent on a number of variables, among them the rate of feed through of the materials, composition of the polymeric material, nature of the crosslinking initiators used in the curable polymeric material, and the geometry of the tool. Illustrative examples include electron beam exposure and actinic radiation (e.g., ultraviolet radiation, visible light radiation, and infrared radiation).

Removal of the article (e.g., 231) from the tooling (e.g., 231) typically generates sufficient mechanical stresses to fracture the minimal land area between the elements, if any, that exists between the individual elements of the article. The decoupled, independent nature of the discrete elements and strong bond of each independent element to the overlay film may give the article substantial flexibility, while, for example, for cube-corner elements retainment of high levels of retroreflective performance after undergoing mechanical deformation stresses. Heat treatment of article (e.g., 231) may optionally be performed after it is removed from the tool. Heating serves to relax stresses that might have developed in the overlay film or elements, and to drive off unreacted moieties and reaction by-products. Typically, such treatment involves heating the article to an elevated temperature (e.g., above the glass transition temperature of the subject curable polymeric material).

The overlay film can be any conventional films used for such purpose, including ionomeric ethylene copolymers, plasticized vinyl halide polymers, acid-functional ethylene copolymers, aliphatic polyurethanes, aromatic polyurethanes, other light transmissive elastomers, and combinations thereof.

The carrier film can be any conventional films, papers or foils used for such purpose, including polyester films, cellulose acetate films, polypropylene films, polycarbonate films, printing paper, kraft paper, security paper, packaging paper, aluminum foil, and copper foil.

Exemplary polymeric materials include polycarbonates; polypropylenes; polyethylenes; styrene acrylonitrile copolymers; styrene (meth)acrylate copolymers; polymethylmethacrylate; styrene maleic anhydride copolymers; nucleated semi-crystalline polyesters; copolymers of polyethylenenaphthalate; polyimides; polyimide copolymers; polyetherimide; polystyrenes; syndiodactic polystyrene; polyphenylene oxides; copolymers of acrylonitrile, butadiene, and styrene; functionally-modified polyolefins; and polyurethanes.

Exemplary UV curable polymeric materials include reactive resin systems capable of being cross-linked by a free radical polymerization mechanism by exposure to actinic radiation (e.g., electron beam, ultraviolet light, or visible light). These materials may also be polymerized thermally with the addition of a thermal initiator (e.g., benzoyl peroxide). Radiation-initiated cationically polymerizable resins also may be used. Reactive resins suitable for forming the array of elements may be blends of photoinitiator and at least one compound bearing an acrylate group. Preferably the resin blend contains a monofunctional, a difunctional, or a polyfunctional compound to ensure formation of a cross-linked polymeric network upon irradiation.

Illustrative examples of resins that are capable of being polymerized by a free radical mechanism that can be used herein include acrylic-based resins derived from epoxies, polyesters, polyethers, and urethanes, ethylenically unsaturated compounds, aminoplast derivatives having at least one pendant acrylate group, isocyanate derivatives having at least one pendant acrylate group, epoxy resins other than acrylated epoxies, and mixtures and combinations thereof. The term acrylate is used here to encompass both acrylates and methacrylates.

Materials for at least partially filling cavities (permanently or temporarily (i.e., those such as fugitive materials that can be removed) include epoxies, urethanes, acrylates, and waxes. In some embodiments, the materials are fugitive solids (e.g., sacrificial binders (e.g., polypropylene carbonate or polyethylene carbonate) and water soluble materials (e.g., polyvinyl alcohol and polyethylene oxide) and fugitive fluids (e.g.,diols (e.g., propylene glycol, diethylene glycol, triethylene glycol, and ethylene glycol), water and aqueous solutions, mineral oils (petrochemicals), organic oils (lipids), organic solvents (e.g., ethanol), and mixtures thereof. In some embodiments, the fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol). In some embodiments, the material is a magnetic material such as powders made of iron, nickel, ferrite, magnetite, samarium cobalt, and neodymium iron boron.

Techniques for at least partially filling cavities as material include those generally known in the art. Exemplary ways for applying the fugitive liquid to a portion of the face of the tooling roll in a desired pattern at least partially filling a portion of cavities include via contact printing, non-contact printing, pattern coating, and combinations thereof. Examples of contact printing include printing surface makes direct contact with a tool: direct and offset flexographic, direct and offset gravure, direct and offset lithographic, direct and offset screen printing. Examples of non-contact printing include ink-jet, spray, acoustic, electrostatic, and digital deposition. Examples of pattern coating include patterned die (for large rectangles) and needle (for downstream lines). An example of a combination of printing techniques is ink-jetting on a transfer roll instead of on a tool. Any of a variety of printing techniques, for example, may be sued to deposit permanent and semi-permanent or temporary materials.

In some embodiments, a second (or more) material may be further applied to a portion of the face of the tooling in a desired pattern at least partially filling a portion of the cavities.

Typically, the $R_a$ and $R_z$ surface roughnesses are not greater than 200 micrometers (in some embodiments, not greater than 175, 150, 100, 75, 70, 60, 50, 40, 30, 25 or even not greater than 20 micrometers; in some embodiments, in a range from 20 micrometers to 175 micrometers, 20 micrometers to 150 micrometers, 20 micrometers to 100 micrometers, 20 micrometers to 75 micrometers, or even from 20 micrometers to 50 micrometers).

Typically, the Rq surface roughnesses are not greater than 100 micrometers (in some embodiments, not greater than 90, 80, 75, 70, 60, 50, 40, 30, 25 20, or even not greater than 10 micrometers; in some embodiments, in a range from 10 micrometers to 100 micrometers, 10 micrometers to 75 micrometers, 10 micrometers to 50 micrometers, or even from 10 micrometers to 25 micrometers).

$R_a$ is the arithmetic average of the absolute values of the surface height measured relative to the mean plane and recorded within the evaluation area,

$$R_a = \frac{1}{NM} \sum_{i=1}^{N} \sum_{j=1}^{M} \left| Z_{ij} \right|$$

wherein Z is the surface height measured relative to the mean plane, and N and M are the number of data points in the x- and y-directions.

$R_q$ is the root mean square average of the surface height measured relative to the mean plane and recorded within the evaluation area,

$$R_q = \frac{1}{NM} \sqrt{\sum_{i=1}^{N} \sum_{j=1}^{M} \left( Z_{ij} \right)^2}$$

wherein Z is the surface height deviation measured relative to the mean plane, and N and M are the number of data points in the x- and y-directions.

$R_z$ is the average maximum surface height of the ten largest peak-to-valley separations in the evaluation area,

$$R_z = \frac{1}{n}\left[(H_1 + H_2 + \ldots + H_n) - (L_1 + L_2 + \ldots + L_n)\right]$$

wherein H is a peak height and L is a valley height, and H and L are referenced to the mean plane. $R_z$ encompasses the range of surface heights present in a field of view. Note that the "VISION FOR PROFILERS" (version 4.20) software by Veeco Instruments, Santa Barbara, CA used for the examples excludes an 11 x 11 region around each H or L point to avoid all peak or valley points emanating from one spike or hole.

$R_{sk}$, or skewness is a measure of the symmetry of the profile about the mean line. $R_{sk}$ provides information about asymmetrical profiles for surfaces with the same values for $R_a$, Rq, etc. Negative skew values indicate a predominance of valleys, while positive skew values are observed for surfaces with a predominance of peaks.

$$R_{sk} = \frac{1}{NM(R_q)^3} \sum_{i=1}^{N} \sum_{j=1}^{M} (Z_{ij})^3$$

wherein Z is the surface height deviation measured relative to the mean plane, Rq is as defined above, N and M are the number of data points in the x- and y-directions.

$R_{ku}$, or kurtosis is a measure of the spread of height values in a data set; it is a measure of the peakedness of a surface about the mean plane. It is also a measure of randomness of observed heights.

$$R_{ku} = \frac{1}{NM(R_q)^4} \sum_{i=1}^{N} \sum_{j=1}^{M} (Z_{ij})^4$$

wherein Z is the surface height deviation measured relative to the mean plane, Rq is as defined above, N and M are the number of data points in the x- and y-directions.

$S_{dq}$ is the Root Mean Square (RMS) Surface Slope, also known as the RMS Gradient, comprising the surface. $S_{dq}$ is a general measurement of the slopes that comprise the surface. As such, it can be used to differentiate surface features with similar average roughness $R_a(S_a)$, as defined above. When evaluated over the measured area, a, the $S_{dq}$ is be represented as follows:

$$S_{dq} = \sqrt{\iint_a \left(\frac{\partial Z(x,y)}{\partial x}\right)^2 + \left(\frac{\partial Z(x,y)}{\partial y}\right)^2 dxdy}$$

wherein Z is the surface height deviation measured relative to the mean plane.

$S_{dr}$ is the developed interfacial area ratio. It is the ratio of the increment of the interfacial area of a surface over the sampling area. A perfectly flat surface would have an $S_{dr}$ of 0%. $S_{dr}$ generally increases with spatial intricacy of the surface texture independent of $R_a(S_a)$. It is be defined as

$$S_{dr} = \frac{(Texture\ Surface\ Area) - (Cross-Sectional\ Area)}{(Cross-Sectional\ Area)}$$

$S_{ds}$, the Summit Density, is the number of summits per unit area that make up the surface. Summits are derived from peaks. A peak is defined as any point that is above all eight nearest neighbors. Peaks are constrained to be separated by at least 1% of the minimum X and Y dimension comprising the 3-D measurement area. Furthermore, summits are found only above a threshold that is 5% of $R_z$ above the mean plane.

$$S_{ds} = \frac{Number\ of\ Peaks}{Measured\ Area}$$

$S_{sc}$ is the Mean Summit Curvature comprising the summits found for the SDS calculations. $S_{sc}$ can help predict the degree of elastic and plastic deformation of a surface under different loading conditions. When evaluated only over the summit features, the $S_{sc}$ can be represented as follows:

$$S_{sc} = \frac{1}{N} \sum_{1}^{N} \int_{Summit\_y} \int_{Summit\_x} \left[ \left( \frac{\partial^2 Z(x,y)}{\partial x^2} \right) + \left( \frac{\partial^2 Z(x,y)}{\partial y^2} \right) \right] dxdy$$

$S_{al}$, is the fastest decay autocorrelation length. It is a measure of the distance over the surface in an optimum direction such that the new location has minimal correlation with the original location. $S_{al}$ is a quantitative measure of the distance along the surface by which one would find a texture that is statistically different from the original location.

$$S_{al} = Length\ of\ fastest\ decay\ ACF\ in\ any\ direction$$

wherein ACF is autocorrelation function.

$S_{tr}$, the texture aspect ratio, is a measure of the spatial isotropy or directionality of the surface texture.

$$S_{tr} = \frac{Length\ of\ fastest\ decay\ ACF\ in\ any\ direction}{Length\ of\ slowest\ decay\ ACF\ in\ any\ direction}$$

wherein ACF is autocorrelation function. For a surface with a dominant lay, the $S_{tr}$ tends towards zero. For a surface with no lay, or spatially isotropic, $S_{tr}$ is equal to 1.00.

$S_{pk}$ is the surface peak height and is an estimate of the peaks above the main flat part of the surface that will be worn away during the running-in period.

$S_k$ is the core roughness depth, which is the depth of the working part of the surface. In other words, the main flat part of the bearing area curve.

$S_m$, the Surface Material Volume, is the amount of material contained in the surface peaks from 0% to 10% of the bearing area ratio.

The Y Crossings is a measure of the number of times that the data cross zero when scanned in the Y directions. This is reported as a number of crossings per unit length.

Surface roughnesses can be obtained utilizing the descriptions above using a confocal microscope (available under the trade designation "KEYENCE VK9710" from Keyence Corporation, Elmwood Park, NJ) to collect data over a test area that is then analyzed software marketed under the trade designation "VISION FOR PROFILERS" (version 4.20) by Veeco Instruments, Santa Barbara, CA, which utilizes the surface roughnesses descriptions described above. The test area size and orientation should be the same in both the first and second regions, and the test area size should be approximately 200 x 200 micrometers. Somewhat larger or smaller test area dimensions may be chosen in order to ensure the test area fits completely within each region without overlapping and to create test areas with four or more microstructures. Seven surface roughness measurements were averaged to determine the surface roughness of a surface.

Any of a variety of configurations of the first and second regions (and optional additional regions) can be provided. For example, in some embodiments a region may be in any of a variety of geometric shapes such as a circle, oval, square, rectangle, triangle, alphanumeric, etc. In another aspect, for example, in some embodiments, there is a plurality of first regions within a matrix of the second region. In some embodiments, there is a plurality of second regions within a matrix of the first region. In some embodiments at least a portion of the first and second regions (and optionally other regions if present) collectively exhibit at least a first (second, third, or more) image or indicia (which may be, for example, a trademark or copyrighted material, including a registered trademark or registered copyright as defined under any of the countries, territories, etc. of the world (including the United States)). The configurations of the first and second regions (optional additional regions) are typically created by the arrangement of the tool used to create elements in the article and/or the pattern of fugitive fluid used in the process for making the article.

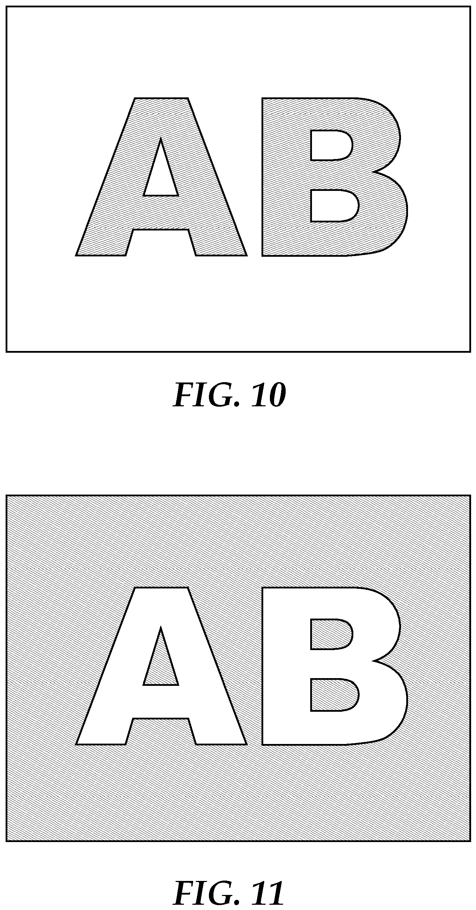

In some embodiments, an image may be, for example, a positive image or a negative image. An exemplary positive image is illustrated in FIG. 10. An exemplary negative image is illustrated in FIG. 11.

In some embodiments, the first region is translucent and/or the second region is transparent. In some embodiments, both the first and second regions are translucent.

Further, optionally other regions, if present can independently be translucent or transparent. The translucency of a region can be affected, for example, by the presence of colorants, pigments, fillers, etc. in the polymeric material and/or the effect from use of the fugitive fluid in the process of making the article.

Typically, the first outer surface of the article is free of ink. In standard printing applications an ink can be a "colorizing agent", a "translucentizing agent" or an "opacifying agent" which is added to a substrate. The term "colorizing agent" refers to a chemical agent having the property of changing the color of the substrate in areas coated or impregnated with the agent. The term "translucentizing agent" refers to a chemical agent having the property of increasing the translucence of areas of a substrate coated or impregnated with that agent. Similarly, the term "opacifying agent" refers to a chemical agent having the property of increasing the opacity (i.e., decreasing the translucence) of a substrate coated or impregnated with that agent.

In some embodiments, articles described herein the first and second regions each have a haze value, wherein the first and second haze values have a difference between them of at least 1%. In some embodiments, articles described herein the first and second regions each have a visible transmission value, and wherein the first and second visible transmission values have a difference between them of at least 1%. In some embodiments, articles described herein the first and second region each have a clarity value, and wherein the first and second clarity values have a difference between them of at least 1%.

In some embodiments, the first major surface of the article has a hard coat thereon. Commercially available materials for providing a hardcoat include liquid-resin based materials such as those available from California Hardcoating Co., San Diego, CA, under the trade designation "PERMANEW"; and from Momentive Performance Materials, Albany, NY under the trade designation "UVHC". Hardcoat materials can be applied to the surface, for example, with conventional liquid coating techniques and cured with either heat or UV treatment.

In some embodiments, the article comprises at least one of colorant or pigment. In some embodiments, the article comprises opaque filler. Exemplary colorants and pigments include titanium dioxide, phthalo blue, red iron oxide, various clays, calcium carbonate, mica, silicas, and talcs. Exemplary fillers include glass beads or fibers, carbon black, flock and mineral reinforcements. Colorants, pigments, and/or fillers can be incorporated into the articles described herein, for example, by adding them using conventional techniques into the polymeric material.

In some embodiments, the cavities of the patterned face of the tooling roll have a pitch in a range from 0.1 micrometer to 1000 micrometers. In some embodiments, the cavities have openings in a range from 0.05 micrometer to 1000 micrometers. In some embodiments, the cavities have depth in a range from 0.02 micrometer to 500 micrometers.

In some embodiments, the first and second pitches (and optionally other pitches, if present) in regard to the article, and since they typically result from to tool (e.g., 25, 125), the pitch of the cavities in the tool, are in a range from 0.1 micrometer to 1000 micrometers.

Exemplary uses of articles described herein include tool-less macro-patterning of transflectors, customized appearance for retroreflective sheeting, incorporation of security features (both overt and covert), decorative patterns for lighting diffusers, images or logos in medical films without inks or contamination, optical films with regions of higher and lower transmission (or haze or reflectivity), abrasives with regions of higher and lower cutting strength, acoustic films with regions of higher and lower sound absorption, perforated filtration films with regions of smaller and larger holes, identification cards or license plates with a unique digital identification, and consumer products with custom images (e.g., trademark indicia over a matte texture).

Exemplary Embodiments

1A. An article having a first major surface with at least first and second regions, the first region comprising a plurality of first structures having a first pitch and a first surface roughness, the second region comprising a plurality of second structures having a second pitch and a second surface roughness, wherein the first and second pitches are the same, wherein the first surface roughness measure is not greater than 50 percent of the second surface roughness measure, and wherein at least a portion of the at least first and second regions have a surface roughness difference between them that together exhibit at least a portion of a first image.

2A. The article of embodiment 1A, wherein the first surface roughness measure is not greater than 30 percent of the second surface roughness measure

3A. The article of either embodiment 1A or 2A, wherein the surface roughness difference between the first and second surface roughnesses is at least 5 percent.

4A. The article of any preceding embodiment, wherein the first and second surface roughnesses are at least one

of $R_a$, $R_q$, $R_z$, or $S_{ds}$.

5A. The article of any preceding embodiment, wherein first image includes at least one of alphanumerics a first trademark indicia or a first copyrighted indicia.

6A. The article of any preceding embodiment, wherein the second region is transparent.

7A. The article of any preceding embodiment, wherein the first region is translucent.

8A. The article of any preceding embodiment, wherein the second region is translucent.

9A. The article of any preceding embodiment, wherein the first and second regions each have a haze value, and wherein the first and second haze values have a difference between them of at least 1%.

10A. The article of any preceding embodiment, wherein the first and second regions each have a visible transmission value, and wherein the first and second visible transmission values have a difference between them of at least 1%.

11A. The article of any preceding embodiment, wherein the first and second regions each have a clarity value, and wherein the first and second clarity values have a difference between them of at least 1%.

12A. The article of any preceding embodiment, wherein the first outer surface is free of ink.

13A. The article of any preceding embodiment, wherein the first and second pitches are in a range from 0.1 micrometer to 1000 micrometers.

14A. The article of any preceding embodiment, wherein there is a plurality of first regions within a matrix of the second region.

15A. The article of any of embodiments 1A to 13A, wherein there is a plurality of second regions within a matrix of the first region.

16A. The article of any preceding embodiment, wherein the first surface roughness is not greater than 200 micrometers.

17A. The article of any preceding embodiment, wherein the first region comprises an electrically function area.

18A. The article of any preceding embodiment, wherein the first region comprises metal.

19A. The article of any preceding embodiment, wherein the first region comprises semi-metallic.

20A. The article of any preceding embodiment, wherein the first and second regions have different dielectric properties.

21A. The article of any preceding embodiment, wherein the first major surface of the article has a hard coat thereon.

22A. The article of any preceding embodiment comprising at least one of colorant or pigment.

23A. The article of any preceding embodiment comprising opaque filler.

1B. A method of making the article of any of embodiments 1A to 23A, the method comprising:

providing tooling having a patterned face comprising cavities;
applying a first material to a portion of the face of the tooling in a desired pattern at least partially filling a portion of cavities; and
contacting a surface of a polymeric material and the face of the tooling having the desired pattern at least partially filling a portion of the cavities to provide the article.

2B. The method of embodiment 1B, wherein the cavities of the patterned face of the tooling have a pitch in a range from 0.1 micrometer to 1000 micrometers, openings in a range from 0.05 micrometer to 1000 micrometers, and a depth in a range from 0.02 micrometer to 500 micrometers.

3B. The method of either embodiment 1B or 2B, wherein the applying the first material to a portion of the face of the tooling in a desired pattern at least partially filling a portion of cavities is performed via contact printing, non-contact printing, pattern coating, or combinations thereof.

4B. The method of any of embodiments 1B to 3B, further comprising applying a second material to a portion of the face of the tooling in a desired pattern at least partially filling a portion of cavities.

5B. The method of any of embodiments 1B to 4B, wherein the first material is a fugitive material.

6B. The method of embodiment 5B, wherein the first fugitive material is a liquid.

7B. The method of embodiments 6B, wherein the first fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol.

8B. The method of any of embodiments 1B to 4B, wherein the first material is a magnetic material.

9B. The method of any of embodiments 1B to 8B, wherein the tooling is rotatable tooling (e.g., a belt).

10B. The method of any of embodiments 1B to 8B, wherein the tooling is a plate.

11B. The method of any of embodiments 1B to 10B, wherein at least a portion of the cavities of the as-provided are at least partially filled with a material in a desired pattern prior to applying the first material.

1C. A method of making the article of any of embodiments 1A to 23A, the method comprising:

   providing a rotatable tooling roll having a patterned face comprising cavities;
   providing a rotatable nip roll positioned with respect to the tooling roll such that there is an infeed nip between the tooling roll and nip roll;
   applying a first material to a portion of the face of the tooling roll in a desired pattern at least partially filling a portion of cavities; and
   introducing a continuous stream of UV curable polymeric material and a carrier film into the infeed nip while driving one of the tooling roll or nip roll, wherein the carrier film is closer to the nip roll than the UV curable polymeric material; and
   curing the UV curable polymeric material

to provide the article.

2C. The method of embodiment 1C, further comprising having the first material removed from the face of the tooling roll prior to the roll completing a full revolution from the application of the first material to a portion of the face of the tooling roll in a desired pattern to at least partially fill a portion of cavities.

3C. The method of either embodiment 1C or 2C, wherein the cavities of the patterned face of the tooling roll have a pitch in a range from 0.1 micrometer to 1000 micrometers, openings in a range from 0.05 micrometer to 1000 micrometers, and a depth in a range from 0.02 micrometer to 500 micrometers.

4C. The method of any of embodiments 1C to 3C, wherein the applying the first material to a portion of the face of the tooling roll in a desired pattern at least partially filling a portion of cavities is performed via contact printing, non-contact printing, pattern coating, or combinations thereof.

5C. The method of any of embodiments 1C to 4C, further comprising applying a second material to a portion of the face of the tooling in a desired pattern at least partially filling a portion of cavities.

6C. The method of any of embodiments 1C to 5C, wherein the first material is a fugitive material.

7C. The method of embodiment 6C, wherein the first fugitive material is a liquid.

8C. The method of embodiment 7C, wherein the first fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol.

9C. The method of any of 1C to 5C, wherein the first material is a magnetic material.

10C. The method of any of embodiments 1C to 9C, wherein at least a portion of the cavities of the as-provided are at least partially filled with a material in a desired pattern prior to applying the first material.

1D. A method of making the article of any of embodiments 1A to 23A, the method comprising:

provide a rotatable tooling roll having a patterned face comprising cavities;
providing a rotatable nip roll positioned with respect to the tooling roll such that there is an infeed nip between the tooling roll and nip roll;
applying a first material to a portion of the face of the tooling roll in a desired pattern at least partially filling a portion of cavities; and
introducing a continuous stream of extrudable polymeric material into the infeed nip while driving at least one of the tooling roll or nip roll to provide the article.

2D. The method of embodiment 1D, further comprising having the first material removed from the face of the tooling roll prior to the roll completing a full revolution from the application of the first material to a portion of the face of the tooling roll in a desired pattern to at least partially fill a portion of cavities.

3D. The method of either embodiment 1D or 2D, wherein the cavities of the patterned face of the tooling roll have a pitch in a range from 0.1 micrometer to 1000 micrometers, openings in a range from 0.05 micrometer to 1000 micrometers, and a depth in a range from 0.02 micrometer to 500 micrometers.

4D. The method of any of embodiments 1D to 3D, wherein the applying the first material to a portion of the face of the tooling roll in a desired pattern at least partially filling a portion of cavities is performed via contact printing, non-contact printing, pattern coating, or combinations thereof.

5D. The method of any of embodiments 1D to 4D, further comprising applying a second material to a portion of the face of the tooling in a desired pattern at least partially filling a portion of cavities.

6D. The method of any of embodiments 1D to 5D, wherein the first material is a fugitive material.

7D. The method of embodiment 6D, wherein the first fugitive material is a liquid.

8D. The method of embodiment 7D, wherein the first fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol.

9D. The method of any of embodiments 1D to 5D, wherein the first material is a magnetic material.

10D. The method of any of embodiments 1D to 9D, wherein at least a portion of the cavities of the as-provided are at least partially filled with a material in a desired pattern prior to applying the first material.

1E. A method of making the article of any of embodiments 1A to 23A, the method comprising:

providing tooling having a patterned face (e.g., the face of the tooling having a desired pattern at least partially filling a portion of the cavities); and
contacting a surface of a polymeric material to provide the article.

1F. A method of making the article of any of embodiments 1A to 23A, the method comprising:

providing a rotatable tooling roll having a patterned face;

providing a rotatable nip roll positioned with respect to the tooling roll such that there is an infeed nip between the tooling roll and nip roll;

introducing a continuous stream of UV curable polymeric material and a carrier film into the infeed nip while driving one of the tooling roll or nip roll, wherein the carrier film is closer to the nip roll than the UV curable polymeric material; and

curing the UV curable polymeric material

to provide the article.

IG. A method of making the article of any of embodiments 1A to 23A, the method comprising:

providing a rotatable tooling roll having a patterned face;

providing a rotatable nip roll positioned with respect to the tooling roll such that there is an infeed nip between the tooling roll and nip roll; and

introducing a continuous stream of extrudable polymeric material into the infeed nip while driving at least one of the tooling roll or nip roll to provide the article.

IH. An article having a first major surface with at least first and second regions, the first region comprising a plurality of first structures and having a first surface roughness, the second region comprising a plurality of second structures and having a second surface roughness, wherein the first and second regions join together with no height discontinuity line, wherein the first surface roughness is not greater than 100 percent of the second surface roughness, and wherein at least a portion of the at least first and second regions have a surface roughness difference between them that together exhibit at least a portion of a first image.

2H. The method of embodiment 1H, wherein the first surface roughness is not greater than 80 percent of the second surface roughness.

3H. The article of either embodiment 1H or 2H, wherein the surface roughness difference between the first and second surface roughnesses is at least 5 percent.

4H. The article of any of embodiments 1H to 3H, wherein the first and second surface roughnesses are at least one of $R_a$, $R_q$, $R_z$, or $S_{ds}$.

5H. The article of embodiments 1H to 4H, wherein first image includes at least one of alphanumerics, a first trademark indicia or a first copyrighted indicia.

6H. The article of embodiments 1H to 5H, wherein the second region is transparent.

7H. The article of embodiments 1H to 6H, wherein the first region is translucent.

8H. The article of embodiments 1H to 7H, wherein the second region is translucent.

9H. The article of embodiments 1H to 8H, wherein the first and second regions each have a haze value, and wherein the first and second haze values have a difference between them of at least 1%.

10H. The article of embodiments 1H to 9H, wherein the first and second regions each have a visible transmission value, and wherein the first and second visible transmission values have a difference between them of at least 1%.

11H. The article of embodiments 1H to 10H, wherein the first and second regions each have a clarity value, and wherein the first and second clarity values have a difference between them of at least 1%.

12H. The article of embodiments 1H to 11H, wherein the first outer surface is free of ink.

13H. The article of embodiments 1H to 12H, wherein the first and second pitches are in a range from 0.1 micrometer to 1000 micrometers.

14H. The article of embodiments 1H to 13H, wherein there is a plurality of first regions within a matrix of the second region.

15H. The article of embodiments 1H to 14H, wherein there is a plurality of second regions within a matrix of the first region.

16H. The article of embodiments 1H to 15H, wherein the first surface roughness is not greater than 200 micrometers.

17H. The article of embodiments 1H to 16H, wherein the first region comprises an electrically function area.

18H. The article of embodiments 1H to 17H, wherein the first region comprises metal.

19H. The article of embodiments 1H to 18H, wherein the first region comprises semi-metallic.

20H. The article of embodiments 1H to 19H, wherein the first and second regions have different dielectric properties.

21H. The article of embodiments 1H to 20H, wherein the first major surface of the article has a hard coat thereon.

22H. The article of embodiments 1H to 21H comprising at least one of colorant or pigment.

23H. The article of embodiments 1H to 22H comprising opaque filler.

24H. The article of embodiments 1H to 23H, wherein the first and second structures each have a pitch, and wherein the pitch is the same.

1I. A method of making the article of embodiments 1H to 24H, the method comprising:

    providing tooling having a patterned face comprising cavities;
    applying a first material to a portion of the face of the tooling in a desired pattern at least partially filling a portion of cavities; and
    contacting a surface of a polymeric material and the face of the tooling having the desired pattern at least partially filling a portion of the cavities to provide the article.

2I. The method of embodiment 1I, wherein the cavities of the patterned face of the tooling have a pitch in a range from 0.1 micrometer to 1000 micrometers, openings in a range from 0.05 micrometer to 1000 micrometers, and a depth in a range from 0.02 micrometer to 500 micrometers.

3I. The method of either embodiment 1I or 2I, wherein the applying the first material to a portion of the face of the tooling in a desired pattern at least partially filling a portion of cavities is performed via contact printing, non-contact printing, pattern coating, or combinations thereof.

4I. The method of any of embodiments 1I to 3I, further comprising applying a second material to a portion of the face of the tooling in a desired pattern at least partially filling a portion of cavities.

5I. The method of any of embodiments 1I to 4I, wherein the first material is a fugitive material.

6I. The method of embodiment 5I, wherein the first fugitive material is a liquid.

7I. The method of embodiment 6I, wherein the first fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol.

8I. The method of any of embodiments 1I to 4I, wherein the first material is a magnetic material.

9I. The method of any of embodiments 1I to 8I, wherein the tooling is rotatable tooling (e.g., a belt).

10I. The method of any of embodiments 1I to 8I, wherein the tooling is a plate.

11I. The method of any of embodiments 1I to 10I, wherein at least a portion of the cavities of the as-provided are at least partially filled with a material in a desired pattern prior to applying the first fugitive material.

1J. A method of making the article of any of embodiments 1H to 24H, the method comprising:

> providing a rotatable tooling roll having a patterned face comprising cavities;
> providing a rotatable nip roll positioned with respect to the tooling roll such that there is an infeed nip between the tooling roll and nip roll;
> applying a first material to a portion of the face of the tooling roll in a desired pattern at least partially filling a portion of cavities;
> introducing a continuous stream of UV curable polymeric material and a carrier film into the infeed nip while driving one of the tooling roll or nip roll, wherein the carrier film is closer to the nip roll than the UV curable polymeric material; and
> curing the UV curable polymeric material

to provide the article.

2J. The method of embodiment 1J, further comprising having the first material removed from the face of the tooling roll prior to the roll completing a full revolution from the application of the first material to a portion of the face of the tooling roll in a desired pattern to at least partially fill a portion of cavities.

3J. The method of either embodiment 1J or 2J, wherein the cavities of the patterned face of the tooling roll have a pitch in a range from 0.1 micrometer to 1000 micrometers, openings in a range from 0.05 micrometer to 1000 micrometers, a depth in a range from 0.02 micrometer to 500 micrometers.

4J. The method of any of embodiments 1J to 3J, wherein the applying the first material to a portion of the face of the tooling roll in a desired pattern at least partially filling a portion of cavities is performed via contact printing, non-contact printing, pattern coating, or combinations thereof.

5J. The method of any of embodiments 1J to 4J, further comprising applying a second material to a portion of the face of the tooling in a desired pattern at least partially filling a portion of cavities.

6J. The method of any of embodiments 1J to 1J, wherein the first material is a fugitive material.

7J. The method of embodiment 6J, wherein the first fugitive material is a liquid.

8J. The method of embodiment 7J, wherein the first fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol.

9J. The method of any of 1J to 6J, wherein the first material is a magnetic material.

10J. The method of any of embodiments 1J to 9J, wherein at least a portion of the cavities of the as-provided are at least partially filled with a material in a desired pattern prior to applying the first material.

1K. A method of making the article of any of embodiments 1H to 24H, the method comprising:

> providing a rotatable tooling roll having a patterned face comprising cavities;
> providing a rotatable nip roll positioned with respect to the tooling roll such that there is an infeed nip between the tooling roll and nip roll;
> applying a first material to a portion of the face of the tooling roll in a desired pattern at least partially filling a portion of cavities; and
> introducing a continuous stream of extrudable polymeric material into the infeed nip while at least one of driving the tooling roll or nip roll to provide the article.

2K. The method of embodiment 1K, further comprising having the first material removed from the face of the tooling roll prior to the roll completing a full revolution from the application of the first material to a portion of the face of the tooling roll in a desired pattern to at least partially fill a portion of cavities.

3K. The method of either embodiment 1K or 2K, wherein the cavities of the patterned face of the tooling roll have a pitch in a range from 0.1 micrometer to 1000 micrometers, openings in a range from 0.05 micrometer to 1000 micrometers, a depth in a range from 0.02 micrometer to 500 micrometers.

4K. The method of any of embodiments 1K to 3K, further comprising applying a second material to a portion of the face of the tooling in a desired pattern at least partially filling a portion of cavities.

5K. The method of any of embodiments 1K to 4K, wherein the first material is a fugitive material.

6K. The method of embodiment 5K, wherein the first fugitive material is a liquid.

7K. The method of embodiment 6K, wherein the fugitive liquid comprises liquid selected from the group consisting of propylene glycol, propylene glycol and ethanol, diethylene glycol, diethylene glycol and ethanol, triethylene glycol, triethylene glycol and ethanol, ethylene glycol, ethylene glycol and ethanol, water, and water and ethanol.

8K. The method of any of embodiments 1K to 5K, wherein the first material is a magnetic material.

9K. The method of any of embodiments 1K to 8K, wherein at least a portion of the cavities of the as-provided are at least partially filled with A material in a desired pattern prior to applying the first material.

1L. A method of making the article of any of embodiments 1H to 24H, the method comprising:

providing tooling having a patterned face (e.g., the face of the tooling having a desired pattern at least partially filling a portion of the cavities); and
contacting a surface of a polymeric material to provide the article.

1M. A method of making the article of any of embodiments 1H to 24H, the method comprising:

providing a rotatable tooling roll having a patterned face;
providing a rotatable nip roll positioned with respect to the tooling roll such that there is an infeed nip between the tooling roll and nip roll;
introducing a continuous stream of UV curable polymeric material and a carrier film into the infeed nip while driving one of the tooling roll or nip roll, wherein the carrier film is closer to the nip roll than the UV curable polymeric material; and;
curing the UV curable polymeric material

to provide the article.

1N. A method of making the article of any of embodiments 1H to 24H, the method comprising:

providing a rotatable tooling roll having a patterned face;
providing a rotatable nip roll positioned with respect to the tooling roll such that there is an infeed nip between the tooling roll and nip roll; and
introducing a continuous stream of extrudable polymeric material into the infeed nip while driving at least one of the tooling roll or nip roll to provide the article.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

Example 1

Example 1 was prepared by extrusion casting a 0.14 millimeter (0.0055 inch) thick poly(methyl methacrylate) (obtained under trade designation "PLEXIGLASS VO44" from Arkema Inc., Philadelphia, PA) film at 9.1 meters per minute (30 feet per minute). The temperature of the poly(methyl methacrylate) to be extruded was about 243°C (470°F). The extruded film was nipped into the surface of a 254 millimeter (10 inch) diameter diamond turned roll having both a down web thread cut and a cross web thread cut creating a 140 micrometer pitch intersecting pattern. The water temperature flowing inside the roller was set to 82°C (180°F).
A mixture of propylene glycol (CAS Registry Number: 57-55-6; obtained from Alfa Aesar, Ward Hill, MA) and ethanol (CAS Registry Number: 64-17-5; obtained from Branntag Great Lakes, Wauwatosa, WI) was prepared at a 1:1 ratio by weight. A film of the fluid mixture was spread onto a glass plate with a Mayer rod (Number RDS 22). A flexographic plate (obtained under trade designation "KODAK NX .045 PLATE" from Southern Graphics, Brooklyn Park, MN) was taped onto a handheld paint roller and rolled over the glass plate to transfer a thin layer of fluid to the flexographic pattern.

The paint roller with flexographic plate and layer of fluid was then pressed for one revolution against the diamond turned roll during the film extrusion casting, transferring a pattern of the fluid to the film. The film was collected and a single, clear image of the flexographic pattern was observed.

A confocal microscope (under the trade designation "KEYENCE VK9710" from Keyence Corporation, Elmwood Park, NJ) was used to measure roughness parameters in a 200 micrometer by 200 micrometer area in both regions of the film. The data was analyzed using software marketed under the trade designation "VISION FOR PROFILERS" (version 4.20) by Veeco Instruments, Santa Barbara, CA, producing the following results (based on seven measurements per sample):

|  | Region 1 | Region 2 | Difference |
|---|---|---|---|
| $R_a$, micrometers | 3.69 | 2.72 | 35.7% |
| $R_q$, micrometers | 4.62 | 3.50 | 32.0% |
| $R_z$, micrometers | 21.59 | 17.10 | 26.2% |
| $S_{DS}$, 1/micrometers$^2$ | 380 | 1520 | -75.0% |

Example 2

Example 2 was prepared as described in Example 1, except the temperature of the diamond turned roll was set to 71°C (160°F).

A clear image was observed followed by a second less clear image.

Example 3

Example 3 was prepared as described in Example 1, except the temperature of the diamond turned roll was set to 60°C (140°F).

A clear image was observed followed by two other less clear images.

Example 4

Example 4 was prepared as described in Example 1, except the temperature of the diamond turned roll was set to 49°C (120°F).

A clear image was observed followed by three other less clear images.

Example 5

Example 5 was prepared as described in Example 1, except a 0.27 millimeter (0.0106 inch) thick polycarbonate (obtained under trade designation "MAKROLON OD2015" from Bayer Corp., Pittsburgh, PA) was extrusion cast onto the tooling roll. The fugitive liquid was deionized water and was applied to the diamond turned roll surface with a small brush as a stripe approximately 1 millimeter wide and 30 centimeters long.

A clear image was observed followed by no secondary images.

Example 6

Example 6 was prepared as described in Example 5, except propylene glycol (CAS Registry Number: 57-55-6; obtained from Alfa Aesar), was used as the fugitive liquid.

A clear image was observed followed by one other less clear image.

Example 7

Example 7 was prepared as described in Example 5, except ethylene glycol (CAS Registry Number: 107-21-1; obtained from Mallinckrodt Baker, Phillipsburg, NJ), was used as the fugitive liquid.

A clear image was observed followed by five other less clear images.

Example 8

Example 8 was prepared as described in Example 5, except diethylene glycol (CAS Registry Number: 111-46-6; obtained from Alfa Aesar), was used as the fugitive liquid.

A clear image was observed followed by four other less clear images.

Example 9

Example 9 was prepared as described for Example 5, except triethylene glycol (CAS Registry Number: 112-27-6; obtained from Alfa Aesar), was used as the fugitive liquid.

A clear image was observed followed by six other less clear images.

Example 10

Example 10 was prepared by extrusion casting a 0.24 millimeter (0.0095 inch) thick polyethylene terephthalate copolymer, PETG, (obtained under trade designation "EASTAR 6763" from Eastman Chemical Company, Kingsport, TN) film at 6.1 meters per minute (20 feet per minute). The temperature of the PETG to be extruded was about 260°C (500°F). The extruded film was nipped into the surface of a 305 millimeter (12 inch) diameter diamond turned roll having both a dwn web thread cut and a cross web thread cut creating a 140 micrometer pitch intersecting pattern. The water temperature flowing inside the roller was set to 54°C (130°F).

An inkjet printing apparatus (obtained under trade designation "SPECTRA SE128" from FUJIFILM Dimatix, Inc., Santa Clara, CA) was used to transfer a pattern of propylene glycol (CAS Registry Number: 57-55-6; obtained from Alfa Aesar) onto the diamond turned roll during the extrusion process. A series of text characters measuring 5 millimeters by 40 millimeters were transferred by the apparatus, with the inkjet head temperature at 49C. The film was collected and clear images of the text characters were observed as well as repeated images.

A confocal microscope ("KEYENCE VK9710") was used to measure roughness parameters in a 212 micrometer by 283 micrometer area in both regions of the film. The data was analyzed using software marketed under the trade designation "VISION FOR PROFILERS" (version 4.20), producing the following results (based on seven measurements per sample):

|  | Region 1 | Region 2 | Difference |
| --- | --- | --- | --- |
| $R_a$, micrometers | 8.5 | 9.58 | -11.3% |
| $R_q$, micrometers | 10.4 | 11.5 | -9.6% |
| $R_z$, micrometers | 47.3 | 53.1 | -10.9% |
| $S_{ds}$, 1/millimeters$^2$ | 3800 | 3200 | 18.8% |

Example 11

Example 11 was prepared by extrusion casting a 0.32 millimeter (0.0125 inch) thick polypropylene, (obtained under trade designation "TOTAL POLYPROPYLENE 5724" from Total Petrochemicals USA Inc., Houston, TX) film at 6.8 meters per minute (22.5 feet per minute). The temperature of the polypropylene to be extruded was about 218°C (425°F). The extruded film was nipped into the surface of a 305 millimeter (12 inch) diameter roll having bead-blasted matte texture. The water temperature flowing inside the roller was set to 52°C (125°F).

A flexographic proofing instrument (obtained under trade designation "ESIPROOF" from R K Print Coat Instruments of Litlington, United Kingdom) was used to transfer a pattern of propylene glycol (CAS Registry Number: 57-55-6; obtained from Alfa Aesar) onto the matte texture roll during the coating and curing process. The proofing instrument used an anilox roll with 80 cells per linear centimeter (200 cells per linear inch) and a rubber pattern roll with a series of 20 millimeter wide '3M' logos engraved onto the surface by Caliber Engraving, Brea, CA. A hot air gun (obtained under trade designation HG 2310 LCD from Steinel America Inc., Bloomington, MN) was set to 316°C (600°F) and used to blow hot air onto the surface of the matte texture roll between the film strip-off and pattern transfer locations. The film was collected and clear images of the logo were observed with no repeated images.

A confocal microscope ("KEYENCE VK9710") was used to measure roughness parameters in a 770 micrometer by 185 micrometer area in both regions of the film. The data was analyzed using software marketed under the trade designation "VISION FOR PROFILERS" (version 4.20), producing the following results (based on seven measurements per sample):

|  | Region 1 | Region 2 | Difference |
|---|---|---|---|
| $R_a$, micrometers | 7.0 | 7.0 | 0.0% |
| $R_q$, micrometers | 9.0 | 10.0 | -10.0% |
| $R_z$, micrometers | 61.0 | 61.0 | 0.0% |
| $S_{ds}$, 1/millimeters$^2$ | 2050 | 1150 | 78.3% |

Example 12

Example 12 was prepared as described for Example 11, except the proofing instrument used a rubber roll with no engraved pattern resulting in a continuous stripe image on the film. A hazemeter (obtained under trade designation "HAZE-GARD PLUS" from BYK Gardner USA, Silver Springs, MD) was used to measure the following optical characteristics of the film (data represents the mean and standard deviation of 16 measurements):

|  | Region 1 | Region 2 |
|---|---|---|
| Haze (Percent) | 94.20 ± 0.05 | 93.10 ± 0.08 |
| Transmission (Percent) | 87.2 ± 0.2 | 89.1 ± 0.2 |
| Clarity (Percent) | 4.60 ± 0.03 | 5.20 ± 0.05 |

Foreseeable modifications and alterations of this disclosure will be apparent to those skilled in the art without departing from the scope of this invention. This invention should not be restricted to the embodiments that are set forth in this application for illustrative purposes.

**Claims**

1. An article having a first major surface with at least first and second regions, the first region comprising a plurality of first structures having a first pitch and a first surface roughness, the second region comprising a plurality of second structures having a second pitch and a second surface roughness, wherein the first and second pitches are the same, **characterized in that** the first surface roughness measure is not greater than 50 percent of the second surface roughness measure, and wherein at least a portion of the at least first and second regions have a surface roughness difference between them that together exhibit at least a portion of a first image.

2. A method of making the article of claim 1, the method comprising:

   providing tooling having a patterned face comprising cavities;
   applying a first material to a portion of the face of the tooling in a desired pattern at least partially filling a portion of cavities; and
   contacting a surface of a polymeric material and the face of the tooling having the desired pattern at least partially filling a portion of the cavities to provide the article.

3. A method of making the article of claim 1, the method comprising:

   providing a rotatable tooling roll having a patterned face comprising cavities;
   providing a rotatable nip roll positioned with respect to the tooling roll such that there is an infeed nip between the tooling roll and nip roll;
   applying a first material to a portion of the face of the tooling roll in a desired pattern at least partially filling a portion of cavities;
   introducing a continuous stream of UV curable polymeric material and a carrier film into the infeed nip while driving one of the tooling roll or nip roll, wherein the carrier film is closer to the nip roll than the UV curable polymeric material; and
   curing the UV curable polymeric material

   to provide the article.

4. A method of making the article of claim 1, the method comprising:

providing a rotatable tooling roll having a patterned face comprising cavities;

providing a rotatable nip roll positioned with respect to the tooling roll such that there is an infeed nip between the tooling roll and nip roll;

applying a first material to a portion of the face of the tooling roll in a desired pattern at least partially filling a portion of cavities; and

introducing a continuous stream of extrudable polymeric material into the infeed nip while driving at least one of the tooling roll or nip roll to provide the article.

5. A method of making the article of claim 1, the method comprising:

providing tooling having a patterned face; and

contacting a surface of a polymeric material to provide the article.

6. A method of making the article of claim 1, the method comprising:

providing a rotatable tooling roll having a patterned face;

providing a rotatable nip roll positioned with respect to the tooling roll such that there is an infeed nip between the tooling roll and nip roll; and

introducing a continuous stream of UV curable polymeric material and a carrier film into the infeed nip while driving one of the tooling roll or nip roll, wherein the carrier film is closer to the nip roll than the UV curable polymeric material; and

curing the of UV curable polymeric material

to provide the article.

7. A method of making the article of claim 1, the method comprising:

providing a rotatable tooling roll having a patterned face;

providing a rotatable nip roll positioned with respect to the tooling roll such that there is an infeed nip between the tooling roll and nip roll; and

introducing a continuous stream of extrudable polymeric material into the infeed nip while driving at least one of the tooling roll or nip roll to provide the article.

8. An article having a first major surface with at least first and second regions, the first region comprising a plurality of first structures and having a first surface roughness, the second region comprising a plurality of second structures and having a second surface roughness, **characterized in that** the first and second regions join together with no height discontinuity line, wherein the first surface roughness is not greater than 100 percent of the second surface roughness, and wherein at least a portion of the at least first and second regions have a surface roughness difference between them that together exhibit at least a portion of a first image.

9. A method of making the article of claim 8, the method comprising:

providing tooling having a patterned face comprising cavities;

applying a first material to a portion of the face of the tooling in a desired pattern at least partially filling a portion of cavities; and

contacting a surface of a polymeric material and the face of the tooling having the desired pattern at least partially filling a portion of the cavities to provide the article.

10. A method of making the article of claim 8, the method comprising:

providing a rotatable tooling roll having a patterned face comprising cavities;

providing a rotatable nip roll positioned with respect to the tooling roll such that there is an infeed nip between the tooling roll and nip roll;

applying a first material to a portion of the face of the tooling roll in a desired pattern at least partially filling a portion of cavities;

introducing a continuous stream of UV curable polymeric material and a carrier film into the infeed nip while driving one of the tooling roll or nip roll, wherein the carrier film is closer to the nip roll than the UV curable polymeric material; and

curing the UV curable polymeric material

to provide the article.

**11.** A method of making the article of claim 8, the method comprising:

providing a rotatable tooling roll having a patterned face comprising cavities;
providing a rotatable nip roll positioned with respect to the tooling roll such that there is an infeed nip between the tooling roll and nip roll;
applying a first material to a portion of the face of the tooling roll in a desired pattern at least partially filling a portion of cavities; and
introducing a continuous stream of extrudable polymeric material into the infeed nip while at least one of driving the tooling roll or nip roll to provide the article.

**12.** A method of making the article of any of claim 8, the method comprising:

providing tooling having a patterned face; and
contacting a surface of a polymeric material to provide the article.

**13.** A method of making the article of claim 8, the method comprising:

providing a rotatable tooling roll having a patterned face;
providing a rotatable nip roll positioned with respect to the tooling roll such that there is an infeed nip between the tooling roll and nip roll;
introducing a continuous stream of UV curable polymeric material and a carrier film into the infeed nip while driving one of the tooling roll or nip roll, wherein the carrier film is closer to the nip roll than the UV curable polymeric material; and
curing the UV curable polymeric material

to provide the article.

**14.** A method of making the article of claim 8, the method comprising:

providing a rotatable tooling roll having a patterned face;
providing a rotatable nip roll positioned with respect to the tooling roll such that there is an infeed nip between the tooling roll and nip roll; and
introducing a continuous stream of extrudable polymeric material into the infeed nip while driving at least one of the tooling roll or nip roll to provide the article.

**Patentansprüche**

**1.** Artikel mit einer ersten Hauptoberfläche mit mindestens einem ersten und einem zweiten Bereich, wobei der erste Bereich eine Mehrzahl von ersten Strukturen mit einer ersten Neigung und einer ersten Oberflächenrauigkeit umfasst, und der zweite Bereich eine Mehrzahl von zweiten Strukturen mit einer zweiten Neigung und einer zweiten Oberflächenrauigkeit umfasst, wobei die erste und die zweite Neigung gleich sind, **dadurch gekennzeichnet, dass** das erste Oberflächenrauigkeitsmaß nicht
mehr als 50 Prozent des zweiten Oberflächenrauigkeitsmaßes beträgt, und wobei mindestens ein Abschnitt der mindestens ersten und zweiten Bereiche einen Oberflächenrauigkeitsunterschied untereinander aufweisen, der zusammen mindestens einen Abschnitt eines ersten Bildes aufweist.

**2.** Verfahren zur Herstellung des Artikels nach Anspruch 1, wobei das Verfahren Folgendes umfasst:

Bereitstellen einer Werkzeugvorrichtung mit einer gemusterten Fläche, die Vertiefungen umfasst;
Aufbringen eines ersten Materials auf einen Abschnitt der Fläche der Werkzeugvorrichtung in einem gewünschten Muster, welches mindestens teilweise einen Abschnitt von Vertiefungen füllt; und
Kontaktieren einer Oberfläche eines Polymermaterials und der Fläche der Werkzeugvorrichtung mit dem gewünschten Muster, welches mindestens teilweise einen Abschnitt der Vertiefungen füllt, um das Erzeugnis bereitzustellen.

3. Verfahren zur Herstellung des Artikels nach Anspruch 1, wobei das Verfahren Folgendes umfasst:

Bereitstellen einer drehbaren Werkzeugwalze mit einer gemusterten Fläche, die Vertiefungen umfasst;
Bereitstellen einer drehbaren Andrückwalze, die bezüglich der Werkzeugwalze derart positioniert ist, dass sich ein Zufuhrspalt zwischen Werkzeugwalze und Andrückwalze befindet;
Aufbringen eines ersten Materials auf einen Abschnitt der Fläche der Werkzeugwalze in einem gewünschten Muster, welches mindestens teilweise einen Abschnitt von Vertiefungen füllt;
Einführen eines kontinuierlichen Stroms UV-härtbaren Polymermaterials und einer Trägerfolie in den Zufuhrspalt, während eines der Werkzeugwalze oder der Andrückwalze angetrieben wird, wobei sich die Trägerfolie näher an der Andrückwalze befindet als das UVhärtbare Polymermaterial; und
Härten des UV-härtbaren Polymermaterials,

um das Erzeugnis bereitzustellen.

4. Verfahren zur Herstellung des Artikels nach Anspruch 1, wobei das Verfahren Folgendes umfasst:

Bereitstellen einer drehbaren Werkzeugwalze mit einer gemusterten Fläche, die Vertiefungen umfasst;
Bereitstellen einer drehbaren Andrückwalze, die bezüglich der Werkzeugwalze derart positioniert ist, dass sich ein Zufuhrspalt zwischen Werkzeugwalze und Andrückwalze befindet;
Aufbringen eines ersten Materials auf einen Abschnitt der Fläche der Werkzeugwalze in einem gewünschten Muster, welches mindestens teilweise einen Abschnitt von Vertiefungen füllt; und
Einführen eines kontinuierlichen Stroms extrudierbaren Polymermaterials in den Zufuhrspalt, während mindestens eines der Werkzeugwalze oder der Andrückwalze angetrieben wird, um den Artikel bereitzustellen.

5. Verfahren zur Herstellung des Artikels nach Anspruch 1, wobei das Verfahren Folgendes umfasst: Bereitstellen einer Werkzeugvorrichtung mit einer gemusterten Fläche; und
Kontaktieren einer Oberfläche eines Polymermaterials, um den Artikel bereitzustellen.

6. Verfahren zur Herstellung des Artikels nach Anspruch 1, wobei das Verfahren Folgendes umfasst:

Bereitstellen einer drehbaren Werkzeugwalze mit einer gemusterten Fläche;
Bereitstellen einer drehbaren Andrückwalze, die bezüglich der Werkzeugwalze derart positioniert ist, dass sich ein Zufuhrspalt zwischen Werkzeugwalze und Andrückwalze befindet; und
Einführen eines kontinuierlichen Stroms UV-härtbaren Polymermaterials und einer Trägerfolie in den Zufuhrspalt, während eines der Werkzeugwalze oder der Andrückwalze angetrieben wird, wobei sich die Trägerfolie näher an der Andrückwalze befindet als das UVhärtbare Polymermaterial; und
Härten des UV-härtbaren Polymermaterials,

um den Artikel bereitzustellen.

7. Verfahren zur Herstellung des Artikels nach Anspruch 1, wobei das Verfahren Folgendes umfasst:

Bereitstellen einer drehbaren Werkzeugwalze mit einer gemusterten Fläche;
Bereitstellen einer drehbaren Andrückwalze, die bezüglich der Werkzeugwalze derart positioniert ist, dass sich ein Zufuhrspalt zwischen Werkzeugwalze und Andrückwalze befindet; und
Einführen eines kontinuierlichen Stroms extrudierbaren Polymermaterials in den Zufuhrspalt, während mindestens eines der Werkzeugwalze oder der Andrückwalze angetrieben wird, um den Artikel bereitzustellen.

8. Artikel mit einer ersten Hauptoberfläche mit mindestens einem ersten und einem zweiten Bereich, wobei der erste Bereich eine Mehrzahl von ersten Strukturen umfasst und eine erste Oberflächenrauigkeit aufweist, wobei der zweite Bereich eine Mehrzahl von zweiten Strukturen umfasst und eine zweite Oberflächenrauigkeit aufweist, **dadurch gekennzeichnet, dass** der erste und der zweite Bereich ohne Linie mit ungleichmäßiger Höhe miteinander verbunden sind, wobei die erste Oberflächenrauigkeit nicht mehr als 100 Prozent der zweiten Oberflächenrauigkeit beträgt, und wobei mindestens ein Abschnitt des mindestens ersten und zweiten Bereichs einen Oberflächenrauigkeitsunterschied untereinander aufweisen, der zusammen mindestens einen Abschnitt eines ersten Bildes aufweist.

**9.** Verfahren zur Herstellung des Artikels nach Anspruch 8, wobei das Verfahren Folgendes umfasst:

Bereitstellen einer Werkzeugvorrichtung mit einer gemusterten Fläche, die Vertiefungen umfasst;
Aufbringen eines ersten Materials auf einen Abschnitt der Fläche der Werkzeugvorrichtung in einem gewünschten Muster, welches mindestens teilweise einen Abschnitt von Vertiefungen füllt; und
Kontaktieren einer Oberfläche eines Polymermaterials und der Fläche der Werkzeugvorrichtung mit dem gewünschten Muster, welches mindestens teilweise einen Abschnitt der Vertiefungen füllt, um das Erzeugnis bereitzustellen.

**10.** Verfahren zur Herstellung des Artikels nach Anspruch 8, wobei das Verfahren Folgendes umfasst:

Bereitstellen einer drehbaren Werkzeugwalze mit einer gemusterten Fläche, die Vertiefungen umfasst;
Bereitstellen einer drehbaren Andrückwalze, die bezüglich der Werkzeugwalze derart positioniert ist, dass sich ein Zufuhrspalt zwischen Werkzeugwalze und Andrückwalze befindet;
Aufbringen eines ersten Materials auf einen Abschnitt der Fläche der Werkzeugwalze in einem gewünschten Muster, welches mindestens teilweise einen Abschnitt von Vertiefungen füllt;
Einführen eines kontinuierlichen Stroms UV-härtbaren Polymermaterials und einer Trägerfolie in den Zufuhrspalt, während eines der Werkzeugwalze oder der Andrückwalze angetrieben wird, wobei sich die Trägerfolie näher an der Andrückwalze befindet als das UVhärtbare Polymermaterial; und
Härten des UV-härtbaren Polymermaterials,

um den Artikel bereitzustellen.

**11.** Verfahren zur Herstellung des Artikels nach Anspruch 8, wobei das Verfahren Folgendes umfasst:

Bereitstellen einer drehbaren Werkzeugwalze mit einer gemusterten Fläche, die Vertiefungen umfasst;
Bereitstellen einer drehbaren Andrückwalze, die bezüglich der Werkzeugwalze derart positioniert ist, dass sich ein Zufuhrspalt zwischen Werkzeugwalze und Andrückwalze befindet;
Aufbringen eines ersten Materials auf einen Abschnitt der Fläche der Werkzeugwalze in einem gewünschten Muster, welches mindestens teilweise einen Abschnitt von Vertiefungen füllt; und
Einführen eines kontinuierlichen Stroms extrudierbaren Polymermaterials in den Zufuhrspalt, während mindestens eines des Antreibens der Werkzeugwalze oder der Andrückwalze, um den Artikel bereitzustellen.

**12.** Verfahren zur Herstellung des Artikels nach einem des Anspruchs 8, wobei das Verfahren Folgendes umfasst:

Bereitstellen einer Werkzeugvorrichtung mit einer gemusterten Fläche; und
Kontaktieren einer Oberfläche eines Polymermaterials, um den Artikel bereitzustellen.

**13.** Verfahren zur Herstellung des Artikels nach Anspruch 8, wobei das Verfahren Folgendes umfasst:

Bereitstellen einer drehbaren Werkzeugwalze mit einer gemusterten Fläche;
Bereitstellen einer drehbaren Andrückwalze, die bezüglich der Werkzeugwalze derart positioniert ist, dass sich ein Zufuhrspalt zwischen Werkzeugwalze und Andrückwalze befindet;
Einführen eines kontinuierlichen Stroms UV-härtbaren Polymermaterials und einer Trägerfolie in den Zufuhrspalt, während eines der Werkzeugwalze oder der Andrückwalze angetrieben wird, wobei sich die Trägerfolie näher an der Andrückwalze befindet als das UVhärtbare Polymermaterial; und
Härten des UV-härtbaren Polymermaterials,

um den Artikel bereitzustellen.

**14.** Verfahren zur Herstellung des Artikels nach Anspruch 8, wobei das Verfahren Folgendes umfasst:

Bereitstellen einer drehbaren Werkzeugwalze mit einer gemusterten Fläche;
Bereitstellen einer drehbaren Andrückwalze, die bezüglich der Werkzeugwalze derart positioniert ist, dass sich ein Zufuhrspalt zwischen Werkzeugwalze und Andrückwalze befindet; und
Einführen eines kontinuierlichen Stroms extrudierbaren Polymermaterials in den Zufuhrspalt, während mindestens eines der Werkzeugwalze oder der Andrückwalze angetrieben wird, um den Artikel bereitzustellen.

**Revendications**

1. Article comportant une première surface principale présentant au moins des première et deuxième régions, la première région comprenant une pluralité de premières structures présentant un premier pas et une première rugosité de surface, la deuxième région comprenant une pluralité de deuxièmes structures présentant un deuxième pas et une deuxième rugosité de surface, dans lequel les premier et deuxième pas sont identiques, **caractérisé en ce que**
la mesure de la première rugosité de surface n'est pas
supérieure à 50 % de la mesure de la deuxième rugosité de surface, et dans lequel au moins une partie des au moins première et deuxième régions ont une différence de rugosité de surface entre elles qui, ensemble, présentent au moins une partie d'une première image.

2. Procédé de fabrication de l'article selon la revendication 1, le procédé comprenant les étapes consistant à :

fournir un outillage comportant une face à motifs comprenant des cavités ;
appliquer un premier matériau sur une partie de la face de l'outillage selon un motif souhaité en remplissant au moins partiellement une partie des cavités ; et
mettre en contact une surface d'un matériau polymère et la face de l'outillage comportant le motif souhaité en remplissant au moins partiellement une partie des cavités pour fournir l'article.

3. Procédé de fabrication de l'article selon la revendication 1, le procédé comprenant les étapes consistant à :

fournir un rouleau d'outillage rotatif comportant une face à motifs comprenant des cavités ;
fournir un rouleau pinceur rotatif positionné par rapport au rouleau de l'outillage de telle sorte qu'il existe une fente d'introduction entre le rouleau de l'outillage et le rouleau pinceur ;
appliquer un premier matériau sur une partie de la face du rouleau de l'outillage selon un motif souhaité en remplissant au moins partiellement une partie des cavités ;
introduire un flux continu de matériau polymère durcissable aux UV et un film support dans la fente d'introduction tout en entraînant un parmi le rouleau de l'outillage ou le rouleau pinceur, dans lequel le film support est plus proche du rouleau pinceur
que le matériau polymère durcissable aux UV ; et
durcir le matériau polymère durcissable aux UV
pour fournir l'article.

4. Procédé de fabrication de l'article selon la revendication 1, le procédé comprenant les étapes consistant à :

fournir un rouleau d'outillage rotatif comportant une face à motifs comprenant des cavités ;
fournir un rouleau pinceur rotatif positionné par rapport au rouleau de l'outillage de telle sorte qu'il existe une fente d'introduction entre le rouleau de l'outillage et le rouleau pinceur ;
appliquer un premier matériau sur une partie de la face du rouleau de l'outillage selon un motif souhaité en remplissant au moins partiellement une partie des cavités ; et
introduire un flux continu de matériau polymère extrudable dans la fente d'introduction tout en entraînant au moins un rouleau parmi le rouleau de l'outillage ou le rouleau pinceur pour fournir l'article.

5. Procédé de fabrication de l'article selon la revendication 1, le procédé comprenant les étapes consistant à : fournir un outillage ayant une face à motifs ; et
le mettre en contact avec une surface d'un matériau polymère pour fournir l'article.

6. Procédé de fabrication de l'article selon la revendication 1, le procédé comprenant les étapes consistant à :

fournir un rouleau d'outillage rotatif ayant une face à motifs ;
fournir un rouleau pinceur rotatif positionné par rapport au rouleau de l'outillage de telle sorte qu'il existe une fente d'introduction entre le rouleau de l'outillage et le rouleau pinceur ; et
introduire un flux continu de matériau polymère durcissable aux UV et un film support dans la fente d'introduction tout en entraînant l'un parmi le rouleau de l'outillage ou le rouleau pinceur, dans lequel le film support est plus proche du rouleau pinceur que le matériau polymère durcissable aux UV ; et
durcir le matériau polymère durcissable aux UV pour fournir l'article.

**7.** Procédé de fabrication de l'article selon la revendication 1, le procédé comprenant les étapes consistant à :

fournir un rouleau d'outillage rotatif comportant une face à motifs ;
fournir un rouleau pinceur rotatif positionné par rapport au rouleau de l'outillage de telle sorte qu'il existe une fente d'introduction entre le rouleau de l'outillage et le rouleau pinceur ; et
introduire un flux continu de matériau polymère extrudable dans la fente d'introduction tout en entraînant au moins un parmi le rouleau de l'outillage ou le rouleau pinceur pour fournir l'article.

**8.** Article comportant une première surface principale présentant au moins des première et deuxième régions, la première région comprenant une pluralité de premières structures et présentant une première rugosité de surface, la deuxième région comprenant une pluralité de deuxièmes structures et présentant une deuxième rugosité de surface, **caractérisé en ce que** les première et deuxième régions se rejoignent sans ligne de discontinuité de hauteur, dans lequel la première rugosité de surface n'est pas supérieure à 100 % de la deuxième rugosité de surface, et dans lequel au moins une partie des au moins première et deuxième régions présente une différence de rugosité de surface entre elles qui, ensemble, présentent au moins une partie d'une première image.

**9.** Procédé de fabrication de l'article selon la revendication 8, le procédé comprenant les étapes consistant à :

fournir un outillage comportant une face à motifs comprenant des cavités ;
appliquer un premier matériau sur une partie de la face de l'outillage selon un motif souhaité en remplissant au moins partiellement une partie des cavités ; et
mettre en contact une surface d'un matériau polymère et la face de l'outillage comportant le motif souhaité en remplissant au moins partiellement une partie des cavités pour fournir l'article.

**10.** Procédé de fabrication de l'article selon la revendication 8, le procédé comprenant les étapes consistant à :

fournir un rouleau d'outillage rotatif comportant une face à motifs comprenant des cavités ;
fournir un rouleau pinceur rotatif positionné par rapport au rouleau de l'outillage de telle sorte qu'il existe une fente d'introduction entre le rouleau de l'outillage et le rouleau pinceur ;
appliquer un premier matériau sur une partie de la face du rouleau de l'outillage selon un motif souhaité en remplissant au moins partiellement une partie des cavités ;
introduire un flux continu de matériau polymère durcissable aux UV et un film support dans la fente d'introduction tout en entraînant l'un parmi le rouleau de l'outillage ou le rouleau pinceur, dans lequel le film support est plus proche du rouleau pinceur que le matériau polymère durcissable aux UV ; et
durcir le matériau polymère durcissable aux UV pour fournir l'article.

**11.** Procédé de fabrication de l'article selon la revendication 8, le procédé comprenant les étapes consistant à :

fournir un rouleau d'outillage rotatif comportant une face à motifs comprenant des cavités ;
fournir un rouleau pinceur rotatif positionné par rapport au rouleau de l'outillage de telle sorte qu'il existe une fente d'introduction entre le rouleau de l'outillage et le rouleau pinceur ;
appliquer un premier matériau sur une partie de la face du rouleau de l'outillage selon un motif souhaité en remplissant au moins partiellement une partie des cavités ; et
introduire un flux continu de matériau polymère extrudable dans la fente d'introduction tout en entraînant au moins un parmi le rouleau de l'outillage ou le rouleau pinceur pour fournir l'article.

**12.** Procédé de fabrication de l'article selon la revendication 8, le procédé comprenant les étapes consistant à :

fournir un outillage ayant une face à motifs ; et
le mettre en contact avec une surface d'un matériau polymère pour fournir l'article.

**13.** Procédé de fabrication de l'article selon la revendication 8, le procédé comprenant les étapes consistant à :

fournir un rouleau d'outillage rotatif comportant une face à motifs ;
fournir un rouleau pinceur rotatif positionné par rapport au rouleau de l'outillage de telle sorte qu'il existe une fente d'introduction entre le rouleau de l'outillage et le rouleau pinceur ;
introduire un flux continu de matériau polymère polymérisable aux UV et un film support dans la fente d'introduction tout en entraînant un parmi le rouleau de l'outillage ou le rouleau pinceur, dans lequel le film support est plus proche du rouleau pinceur que le matériau polymère durcissable aux UV ; et
durcir le matériau polymère durcissable aux UV pour fournir l'article.

14. Procédé de fabrication de l'article selon la revendication 8, le procédé comprenant les étapes consistant à :

fournir un rouleau d'outillage rotatif comportant une face à motifs ;
fournir un rouleau pinceur rotatif positionné par rapport au rouleau de l'outillage de telle sorte qu'il existe une fente d'introduction entre le rouleau de l'outillage et le rouleau pinceur ; et
introduire un flux continu de matériau polymère apte à l'extrusion dans la fente d'introduction tout en entraînant au moins un parmi le rouleau de l'outillage ou le rouleau pinceur pour fournir l'article.

FIG. 1

*FIG. 2*

*FIG. 3*

FIG. 4A

FIG. 4B

FIG. 4C

FIG. 4D

EP 2 651 656 B1

**FIG. 5**

**FIG. 6**

*FIG. 7*

*FIG. 7A*

FIG. 8

FIG. 9

*FIG. 10*

*FIG. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0185473 A
- EP 0194042 A
- US 5435816 A, Spurgeon
- US 4588258 A
- US 4938563 A, Nelson
- US 4895428 A, Nelson